# EUROPEAN PATENT APPLICATION

(11) **EP 4 390 308 A1**
(43) Date of publication of application: **26.06.2024**
(21) Application number: 22216142.4
(22) Date of filing: 22.12.2022
(51) Int. Cl.: G01C 15/00

(54) **DETERMINATION OF AN OPTIMAL LASER SCANNING PLAN**

(71) Applicant: Hexagon Technology Center GmbH, 9435 Heerbrugg (CH)
(72) Inventor: METZLER, Bernhard, A-6850 Dornbirn (AT); MÖRWALD, Thomas, A-6900 Bregenz (AT); TÖRÖK, Zoltán, CH-9442 Berneck (CH); VAN DER ZWAN, Elmar Vincent, CH-9428 Walzenhausen (CH)
(74) Representative: Kaminski Harmann

(57) **Abstract**

A method for automatically establishing an optimal laser scanning plan (5, 5n), the scanning plan (5, 5n) indicating an optimal arrangement of multiple distributed standpoints (S1, S1', S1", S2, S2', S2n), the arrangement enabling a scanning of an extended object (O) by multiple terrestrial scans (3a, 3b, 3c, 4) of different parts (R1, R2, R3, H, 9, 9') of the object (O) at respective standpoints (S1, S1', S1", S2, S2', S2n).

## Description

The present invention relates to a method for automatic generation of an optimal scanning plan according to claim 1.

The practice of terrestrial surveying, of measuring space and quantifying distances and angles dates back to antiquity. One of the most important developments in this realm occurred in 1997 with the development of the laser scanner. Such a device can acquire spatial information at an unprecedented speed, taking several thousands of range and angle measurements per second, and has become a very widely used surveying tool. In a measurement, laser scanners can acquire point clouds that represent the captured object.

For gathering dimensional information about an object, particularly of topographical information, the surface of such object typically is scanned by the laser scanner using a laser beam which is moved over the object in a predefined manner. Geodetic or metrological measuring devices like a terrestrial stationary laser scanner or a total station, e.g. Leica P20 or Leica Multi Station 50, are characterized by high measurement accuracy, allowing for very precise scanning of the object, e.g. with an accuracy in the millimetre range or better even up to object distances of several hundred meter. By scanning the object, the (3D-) point cloud is created representing the object by a set of points with defined positions in a common coordinate system. Such terrestrial laser scanner as known in the art can also provide accurate geometric representation of the environment other than a point cloud.

The point cloud is derived by determining a distance for each measuring point and a correlated direction of the laser beam when determining the distance. The point-to-point or scanning resolution is defined by the speed of moving the laser beam on the surface and a triggering-interval for triggering single measurements (e.g. one for each measuring point). The effective point-to-point resolution is also dependent on the distance to the surface to be scanned: with the same device configuration, a near surface is scanned with a denser point grid than a surface farer away.

In addition to generating the point cloud, often an (2D-)image of the object is captured by a camera of the scanning device. The image provides further information concerning the object, e.g. concerning colours or textures of the object.

As from one station point or standpoint usually only a part of the object, e.g. large areas or a facility with many rooms, is measurable while other surface points are hidden, it becomes necessary to set up the measuring devices at least at two different positions with respect to the object such that in combination the whole surface of the object is measurable. The surveying instrument needs direct line-of-sight to the object points to measure. In case of an obstruction, e.g. a tree in front of a building which occludes a part of the façade leads to a so called "scanning shadow". In practice, in such a case the surveying instrument also is set up at a different position where direct line-of-sight to the missing parts is given. Therefore, more than one setup of the surveying instruments is needed and each additional setup takes time and reduces the productivity of the user.

Hence, multiple laser scans are necessary which need to be combined to a complete or final point cloud. Several methods for such registration of point clouds are known, e.g. markerbased or image-based registration first for coarse registration and afterwards geometry-based registration (iterative closest point) for fine adjustment.

Said otherwise, extended objects cannot be surveyed in their entirety from a single deployment or set-up of the scanner, for example because one or more sides of an object face away from the device, because these are angled measurement surroundings (e.g., a plurality of rooms in a building) or because objects are partially shadowed by other objects. Therefore, a single deployment usually does not suffice; instead, the device must survey the measurement surroundings from a plurality of positions. Here, all relevant measurement surrounding regions or all required object points should be surveyed; i.e., gap-free or full scanning of an object should be implemented. A user often finds it difficult, or requires much time, to decide which positions are suitable for deployments for such a full capture of an object such as a building. Or - particularly if a very large number of deployments is required - it is cumbersome to find an optimal measuring path (as a successive progression or order of surveying locations) which avoids unnecessary deployments or repeated surveying without, on the other hand, "missing" regions in the surroundings. Methods have been developed to assist a user to avoid missing object parts during a scanning procedure of an extended object, for example by the EP 3764057.

A further problem is that a full-dome-scan with a stationary laser scanner, i.e. a scanning area from 0° to 360° in horizontal and often -45° to 90° in vertical direction, with a terrestrial laser scanner, in particular in highest resolution, takes some time. In this resolution the distance between the points in 100 meters is for instance about 1.0 mm. For every new set-up of the scanner, a full 360° panorama image is usually obtained which prolongs the overall surveying time. Thus, relocating a stationary laser scanner and recording another set of highly accurate measuring data (second high resolution point cloud) is time consuming, too, and often not necessary for all parts of the object. Though most laser scanners allow for a pre-selection of the scanning resolution, it may be difficult for a user to decide which resolution is adequate and in general the resolution is set for each individual scan; thus some parts of the object of minor relevancy scanned by this single scan may have a too high point density or the other way round.

In addition to stationary laser scanners, there are mobile scanners known, too, for example mobile laser scanners or mobile stereo camera scanners. Such mobile devices have the advantage that a change of station is more easily and less time-consuming possible than with a stationary laser scanner described above; even scanning whilst moving is enabled with some mobile scanners. For example, the EP 2 765 388 B1 discloses a hand-held device which may have a scanning unit for 3D point cloud generation, e.g. a laser scanning unit. For referencing of the 3D point cloud, the respective pose (position and orientation) of the mobile scanner has to be determined. According to the EP 2 765 388 B1, the mobile device has to comprise for this purpose a geodetic target object which is to be targeted by a geodetic measuring device such as a total station. As easier solutions for pose determination, there is known in the art to furnish a mobile scanner with position sensors on board such as an Inertial Measuring Unit (IMU) or GNSS sensors which is for example known from some modern smartphones, too.

However, such mobile handheld sensors allow only for rather imprecise position and orientation determination. Generally spoken, a main drawback of such mobile scanners is their low accuracy, specifically when capturing large or wide areas.

Thus, an object of the present invention is to provide an aid for a user of a terrestrial laser scanner for scanning of an extended object which needs more than one stationing or setup of a laser scanner to be fully captured.

This object is achieved by realising the features of the independent claims. Features which further develop the invention in an alternative or advantageous manner are described in the dependent patent claims.

The present invention relates to a method for automatically establishing of an optimal laser scanning plan for scanning of an object in-the-field. The scanning plan indicates an optimal arrangement or set of multiple distributed standpoints (distributed around the object or within, e.g. in case of a building), the arrangement enabling laser scanning of the extended object by multiple terrestrial laser scans of different parts of the object at respective standpoints such that finally a complete point cloud of the object can be generated.

The method comprises calculating optimal first standpoints for first laser scans to be executed with a first, stationary laser scanner (TLS), in particular of high accuracy, using a model of the object which provides at least a two-dimensional, in particular a tree-dimensional, geometric overview of the entire object and considering defined optimization criteria. The optimization criteria are (minimized) number of standpoints, (minimized) walking distance given by/between standpoints and/or an overall walking distance, overlap of neighboring scans (of neighboring objects parts) and point quality such as point density on object surface/scan resolution.

Further, possible second laser scans are taken into account to be executed with a second scanner, either a stationary laser scanner or preferably a handheld mobile scanner (MS), in particular of low accuracy, at second standpoints as possible filling, e.g. bridging or linking, between first laser scans or an augmenting -in particular augmenting by refining scan resolution or scan point density- of first laser scans in the calculation as an optimization parameter (according to or in view of the optimization criteria), and, if necessary, calculating such second standpoints. Hence, a further alternative, "degree of freedom" or "tool" is added to the configuration options or "toolbox" for finding optimal scanning standpoints by the option of usage of a handheld, mobile scanner.

Then, based on the model of the object, the scanning plan is outputted, indicating the optimal arrangement of first standpoints and -if applicable- of second standpoints by a graphic user interface (GUI) to a user. Hence, there is an allocation or distribution of scans between execution by a stationary laser scanner (TLS) and execution by a mobile scanner (MS) or highly accurate scans and low accuracy scans, whereby the number of MS standpoints or standpoints for low accuracy scans may be zero, that is a set of only TLS-set ups is determined as optimal.

As an option, the method comprises updating the scanning plan in the field after and/or during the scanning process of the object, in particularly in real-time during scanning or after each laser scan. The update is based on scan data of the object resulting from executed scans and/or on measured, e.g. sensed position data (meaning also motion data) of the TLS and/or MS. Thereby, as a further option, updating comprises verifying if all object parts which should have been captured at respective stage of execution of the scanning plan have indeed been captured and outputting the updated scanning plan with a graphical indication of a missing object part if there is any. As still another option, in particular in case of a missing part of the object, the updating comprises calculating an additional standpoint for an additional scan and/or a relocation of an existing (remaining or "future") standpoint.

In a further development of the invention, the calculation of first and/or second standpoints takes into account (as a further optimization criterion) an availability or provision of reference points for location determination of the MS, the reference points to be provided by a first laser scan. That is, when a MS-scan is foreseen, the TLS- and MS-standpoints are arranged in such a way that it is assured that there will be TLS-scan points usable as fixed ground control points for position determination of the MS-scanner, e.g. using a SLAM algorithm (simultaneous localization and mapping).

As another option, a maximal allowable measuring distance for the MS is taken into account in the calculating of standpoints. That is, an upper threshold for handheld measuring range is considered as a parameter which may be a fixed value or depend on further parameters such a properties of the object or measuring angle.

In a further development, a possible parallel execution of first and second scans is considered with avoiding mutual shadowing of object parts by the parallel execution when calculating first and second standpoints.

Optionally, the arrangement or set of standpoints comprises a calculated optimal order or sequence of the standpoints, whereby walking distance preferably is a dedicated optimization criterion for an optimal order.

As another option, the model of the object is generated by a mobile mapping process of the object with the TLS and/or MS, e.g. in a profiler mode of the scanner.

The criterion of overlap of neighboring scans can comprise provision of overlap of a prominent or characteristic geometric object feature.

In further developments, the method comprises providing a graphical user guidance for optimized scanning with the MS at a respective second standpoint based on the scanning plan by the GUI, in particular as an augmented reality view.

As another option, there is a calculation of optimal scanner parameters, in particular a scanning resolution, for each standpoint and outputting the optimal scanning parameter as part of the scanning plan.

As still another option, the method comprises a classification of object parts according to relevancy and considering the respective relevancy in context of the criterion of point density. In addition or as an alternative, in case the model of the object provides a three-dimensional overview, a relevancy classification is used for omitting object parts of low relevancy for the scanning -i.e. irrelevant object parts are to be skipped for scanning and thus no direct line of sight to a possible standpoint is deemed necessary- and filling thus absent scanning data of the omitted object parts using data of the model of the object.

In a further development, the method comprises calculating a (minimum) requirement (or level/demand) for positioning accuracy of a scanner at a respective standpoint, in particular in context of the criterion of point density and/or overlap, and outputting the calculated requirement as part of the scanning plan.

The present invention also relates to a computer program product having program code stored on a machine-readable medium, in particular on an electronic data processing unit configured as a control and evaluation unit of a stationary laser scanner, for carrying out the method according to invention.

The method and the system according to the invention are described or explained in more detail below, purely by way of example, with reference to working examples shown schematically in the drawings. Specifically,
- fig. 1: show schematically an example of a terrestrial laser scanner (TLS) as known in the art;
- figs. 2a,b: show schematically an example of a handheld, mobile laser scanner (MS) as known in the art;
- fig. 3: depicts schematically an example of scanning an extended object with a TLS and a MS;
- fig. 4: shows schematically a first example of a scanning plan;
- fig. 5: shows schematically a second example of a scanning plan;
- figs. 6a,b: shows schematically an example of an update of a scanning plan; and
- fig. 7: shows schematically an example of a generation of an object model.

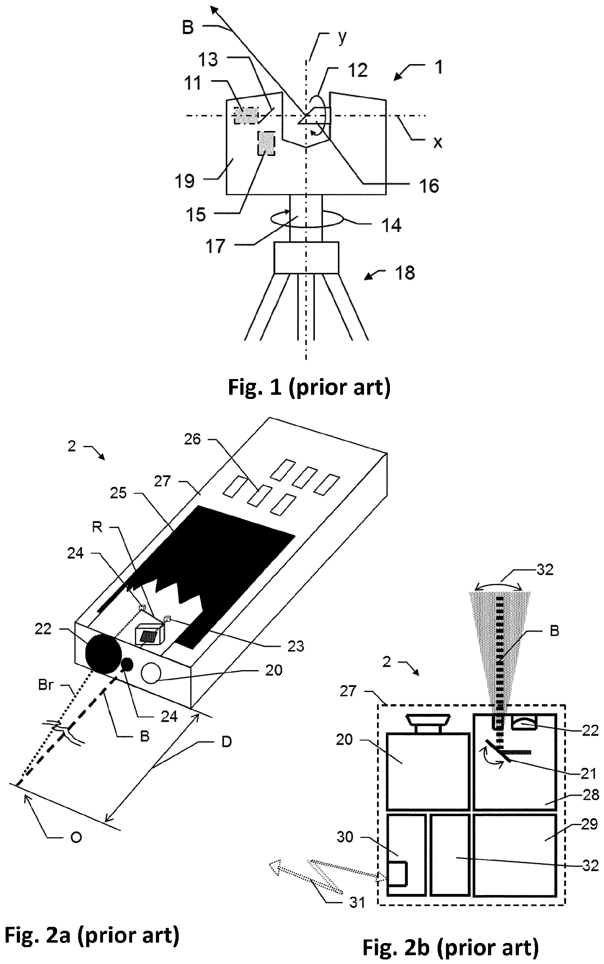

Figure 1 shows an exemplary embodiment of a generic terrestrial stationary laser scanner 1, also abbreviated as TLS, in the example. The latter has an upper part 19, which is connected to a base 17 so as to be rotatable in motordriven fashion about a vertical axis y, said base being disposed on a tripod 18 in this example, such that a user can set up the scanner 1 at a standpoint near an object wherefrom (at least) part of the object can be scanned. The upper part 19 of the scanner 1 contains the light transmitter 11 for emitting a measuring beam B of the laser scanner at the object, a light receiver 15 for receiving components of the measuring beam B backscattered by the object and a beam splitter 13. A beam steering unit 16, which has a mirror, is attached to the upper part 19 so as to be rotatable in motordriven fashion about a transverse axis x. The transverse axis x is orthogonal to the vertical axis y. By rotating 12 the beam steering unit 16 about the transverse axis x, the measuring beam B is guided in vertical fashion over the object's surface while the measuring beam B is guided horizontally over the surface by rotating 14 the entire upper part 19 about the vertical axis y.

A control and evaluation unit (not shown here) is dataconnected to the light transmitter 11 and the light receiver 15 in the upper part 19, wherein the control and evaluation unit, or parts of the same, may also be disposed outside of the upper part 19, for example as a computer connected to the base 17. The control and evaluation unit is embodied to ascertain, for a multiplicity of measurement points, the distance between the laser scanner 1 and the test object from the time-of-flight of the measuring beam B and its backscattered components. To this end, it is also possible, for example, to determine and evaluate the phase shift between the emitted measuring beam B and the received radiation. An indication apparatus (not illustrated here), which can be configured as a display directly on the laser scanner 1 or as a display of a connected computer, can be connected to the control and evaluation unit.

As there need is for a direct line of sight or a need for an unobstructed beam path from the scanner 1 to the object's surface in order to scan it this way, multiple standpoints are needed for scanning of an extended object like a multisided or 3D-object, a nested object or a partly obstructed object. Hence, a typical workflow is that after finishing a scan of a first object part, the user takes the scanner 1 to a further standpoint to position it there by the tripod 18 and scan another part of the object. Hence, when using a TLS scanner 1 to scan a complex object like a building, a surveyor typically must position the TLS scanner at multiple stationings to capture all parts of the object. The surveyor will have to make sure that he uses enough scanning positions to capture everything (no missed areas or parts of the object surface). Above that, important considerations are to have a sufficient point density on each surface and that there is enough overlap between the individual neighboring scans so that they can be combined or registered together properly and easily. On the other hand, setting up the scanner 1 at each standpoint costs time and effort.

Figures 2a, 2b schematically show an example of a handheld mobile scanner (also abbreviated as MS) as known in the art, in this case embodied as a handheld mobile laser scanner 2, in a 3D-view in figure 2a and a cross sectional view in figure 2b. In the example, the handheld scanner 2 comprises an internal camera 20 having a viewing angle in the measurement direction, using the image of which a measurement object O can be targeted, which measurement target point O is then determined in its distance D from the device 2 using a light beam B of the optoelectronic laser scanner 2. The handheld scanner 2 comprises a deflection unit 21, by means of which the targeting direction of the laser distance measurement is deflectable in a defined manner along a scanning path. For example, by the deflection unit 21 deflecting a light beam B, which is emitted by a light emitter 23, such as, for example, a laser diode, and is preferably collimated via an emission optical unit 24, of the laser measurement in accordance with an activation signal of the deflection unit 21 according to a scanning pattern.

In this embodiment, components Br of the light beam B reflected from the target point O are then conducted via a receiving optical unit 22 to a photosensitive electrical component 24. A distance D to the target object O is thus for example ascertainable as already mentioned above from a signal runtime of the light between emission and reception in accordance with the propagation speed of the light. An optional internal reference path R for a part of the emitted light is also shown here.

The above-mentioned components are housed in this case in the housing 27 configured so it can be handheld for the scanning procedure. The housing 27 also comprises in this case an operating and monitoring unit, for example, having a visual or graphical display 25 or a display screen and operating elements 26, such as buttons, a touchscreen, capacitive sensors, etc. Besides camera 20, for example, in the form of a CCD or CMOS image sensor having a corresponding optical unit and the distance measurement unit 28, the housing 27 encloses also a control unit and an analysis unit 29 and a communication unit 30 for e.g. wireless communication 31 with external devices such as a further scanner e.g. a stationary scanner as depicted in figure 1.

The deflection unit 21 can be configured to change the emission direction of the scanning beam B in a monitored manner as indicated by the arrows 32, wherein the receiving unit is configured accordingly in this case to receive backscattering from the entire possible deflection range of the deflection unit 21. For example, this can be performed using a correspondingly configured receiving optical unit 22, which always deflects the entire deflection angle range onto an acquisition region of a photosensitive component 24.

In another embodiment, in addition to the emission direction 32, a receiving direction can also be influenced by the deflection element 21, so that the receiver also always aims at the measurement point O targeted by the emitter. In one exemplary embodiment, in this case the receiving unit 24 can also be formed, for example, using photodetectors having internal amplification, for example, an SPAD array.

The deflection 32 can be achieved in this case in particular in the form of a transmission through - or in the form of a reflection on - an optical component in the corresponding beam path. The field of view of an optionally provided camera 20 in the handheld scanner 2 is in this case always separate from the deflection unit 21, however, and is oriented deflection-free in a measurement direction which is fixed with respect to the device 2 - thus no deflection of the field of view of the camera 20 is performed by the deflection unit 21.

Different embodiments can be used with respect to a deflection unit 21 of a laser scanner as shown in figures 1 or 2a,b, for example, a rotating polygon wheel or another multifaceted component in reflection or transmission, an oscillating mirror having one or two axes of rotation or having a singleaxis or dual-axis flexure or gimbal, an MEMS mirror, a rotating double-wedge system, a movable optical waveguide, a liquid, movable or elastic lens, an electro-optical modulator, etc.

A relationship between the distance measurement points and the deflection 32 thereof and pixel coordinates of the camera 20 can especially also be acquired in this case or known. Therefore, for example, a present deflection 22 of the deflection unit 21 can be ascertained and/or spatial coordinates of the scan points can be ascertained, in particular having a distance measured value of the distance measurement and a one-dimensional or two-dimensional spatial direction of the deflection 32. From the combined respective spatial directions and corresponding distance values of a scan, a so called point cloud can be generated as known in the art. Alternatives known in the art to such a laser beam based point cloud generation (combined measurement of 2D or 3D coordinates of object surfaces) are image based, e.g. based on the principle of photogrammetry. Exemplary alternative embodiments using cameras are a handheld stereo/triangulation camera scanner or a structured light handheld scanner. The term "laser scan" or "laser scanning" as used in context of the present invention is to be understood in a broad sense also comprising such scanners or such a scanning without a dedicated laser beam but with 2D/3D object scanning functionality equivalent to a "real" laser scanner/laser scanning.

As schematically shown, an inertial measurement unit 32 (IMU) (or an inclination or acceleration sensor and/or a gyroscope or compass) can be arranged on the housing 27 for measuring a position of the handheld scanner 2 or for carrying out an activation of the deflection unit 21 in dependence of IMU values. In another example, a plurality of the series of scanning points can form a large point cloud, which is larger than the actual deflection range of the deflection unit 21 enabling on its own only generation of a limited point cloud within to the deflection range limits. This can be performed, for example, in that for the enlarged point cloud, in each case corresponding to an alignment of the handheld device 2, which is associated with the respective scan point and is determined by the IMU, and an associated direction of the deflection of the deflection unit 21 is combined to define a point of the point cloud in its spatial location.

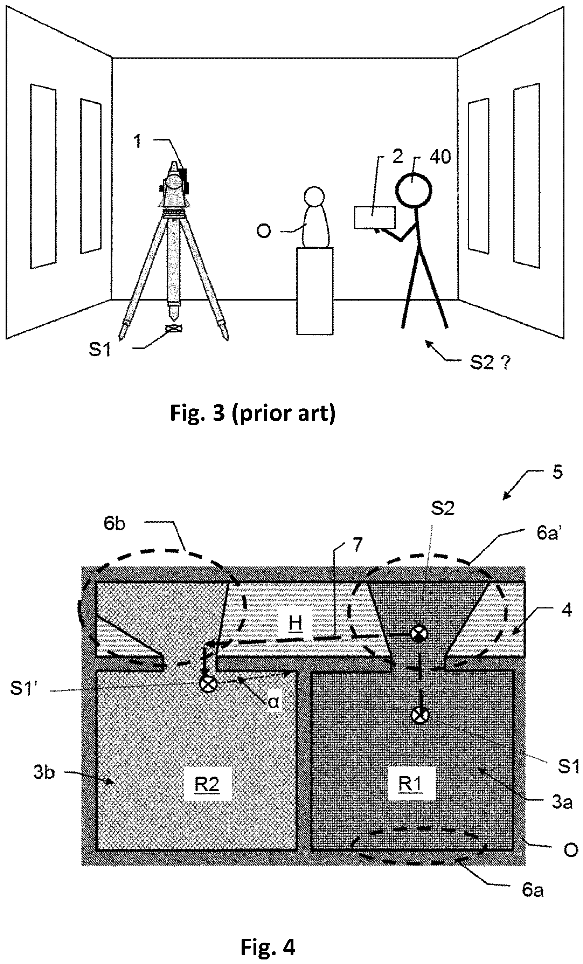

Figure 3 shows an example of a combined usage of a TLS 1 and a MS 2 by a user 40. In order to cover completely the extended object O, i.e. to scan its whole surface all around, scans from at least two sides resp. two different locations are necessary. In the example, the stationary scanner 1 is setup at a first standpoints S1 wherefrom a first scan of part of the object O is done. In order to generate a complete or overall scanning or point cloud of the object O, the user 40 uses the mobile scanner 2 to scan the rest of the object O from another standpoint S2. Then, this second scan is combined or registered to the first scan to form a complete point cloud.

However, for scanning of an extended object O, even in such simple case, it might be difficult for the user 40 to find an optimal second standpoint S2 which allows for a complete coverage and sufficient overlap of the single scans regarding scan registration but on the other hand avoiding unnecessary effort/process duration/amount of scan data or missing any part of the object O.

Thereby, it has also to be considered that in fact, the accuracy of a 3D point cloud generated using a MS 2 is considerably lower than that of the 3D point cloud generated by a TLS 1 due to the precision limitations of such a mobile scanner MS 2 compared to a stationary laser scanner TLS 1. Such precision limitations are for example due to measurement noise as well as due to systematic errors caused by inaccurate calibration that leads to a deformed, bended or wrongly scaled point cloud. Thus, though it means more effort to make additional scans with a stationary TLS 1, it is not optimal in any case to use a mobile handheld scanner 2 instead of a TLS 1 for fully capturing an object O.

Figure 4 shows schematically a first example of a scanning plan 5 which provides an arrangement of multiple distributed standpoints S1, S1', S2 from which single scans an object O can be executed, which single scans together allow for completely capturing the object O. In the example, the object O is a floor with two rooms R1, R2 connected hall H.

For the automatic generation of a scanning plan 5, first standpoints S1, S1' as well as a second standpoint S2 are calculated and indicated, using a 2D-model of the object O. Scanning at these standpoints S1, S1' will result in first scans 3a, 3b (indicated in the figure by the dark point pattern resp. the light point pattern). These first scan regions 3a, 3b will each cover a room R1 resp. R2 completely and a part of the hall H each. Scanning from the second standpoint S2 will result in a second scan 4 (grey stripe pattern, partly overlaid by the other patterns), covering the hall H and part of the first room R1.

This automatically established scanning plan 5 allows for a complete scanning of the object O with a minimal number of stationings S1-S2 as well as a minimal walking distance (indicated by arrows 7) in between the stationings S1-S2 as optimization criteria. In addition, the scanning plan provides a sufficient overlap of the scans 3a-4, allowing for a robust and unambiguous registration. This is enabled by overlap regions 6a, 6a' and 6b. Regions 6a, 6a' indicate overlap of scans 3a and 4, region 6b overlap of scans 4 and 3b. In each case, the geometrical relationship between the two scans 3b-4 resp. 3a-4 can be rigidly determined as more than only one overlapping wall is present in each scan 3a-4 and thus a correct registration is possible without ambiguity. Thereby, as another optimization criterion, the scan resolution or effective point density on the object surface is considered in the automatic standpoint calculation.

In the example, the left one of the first standpoints S1' is a trade-off between a position for sufficient overlap of neighboring scans and a sufficient distance to all walls of room R2 such that the angle of incident α of a measuring beam at each point of a wall (surface) is acceptable for a scan at this standpoint S1'. If the standpoint S1' would be too close to a wall and accordingly the incident angle α too small for points of the wall (above a certain distance to the scanner), the point of beam incidence would be severely smeared and the effective point resolution too low. Thus, for instance e.g. a defined threshold or limit could be defined for the incident angle α which is to be kept or exceeded.

In the example, the rooms R1, R2 are considered as the main measuring task or relevant object parts whereas the hall H is of low relevancy. Such a difference in relevance of object parts can be automatically determined, e.g. according to classes of objects or object parts provided by or determined using the model and/or according to object properties such as structure or geometry, or can be input by the user. The low relevancy of the hall H is considered in establishing the scanning plan 5 in that the second standpoint S2 is dedicated to a scan with a mobile scanner. Hence, only at the first standpoints S1 and S1', there is the need and -compared to a MS- increased effort necessary of a TLS scanning which minimizes the number of TLS-standpoints and reduces the overall time of the scanning process.

The scan 4 with the handheld scanner serves in this case for filling the object space between the two stationary scans 3a,b. As the object part H scanned therewith is of low relevancy, a lower accuracy of a mobile scan is no disadvantage, whereby nevertheless, a full point cloud of the whole object O can be generated with the provided scanning aid 5. To the contrary, e.g. a lower scan resolution of the handheld scan 4 can be advantageous as less data is generated and needs to be stored and processed.

Seen otherwise, the second standpoint S2 for the handheld MS-scan 4 is advantageously used for bridging between the stationings S1, S1' for the stationary TLS-scans 3a,b. This linking by the intermediate "mobile" scan 4 allows for a registration of both stationary scans 3a,3b and combining them, together with "handheld" scan 4 to one point cloud. Thereby, the final point cloud comprises parts with a higher resolution representing the relevant object parts room R1 and R2 (from the single points clouds generated by scans 3a and 3b) and a part of lower resolution representing the hall H (from the single point cloud generated by scan 4).

Said otherwise, the planning aid 5 can consider accuracy characteristics and as well detailed accuracy requirements by the surveyor and multiple available scanning devices (e.g., TLS scanner and handheld scanner). For example, if the object model indicates specific repeating parts of a building, e.g., all the conference rooms, he can use the TLS scanner to scan those in detail and the handheld scanner to scan the rest of the building with less accuracy as a navigation / visualization aid. Alternatively, the handheld scanner could be used to scan small areas of the scene with fine details while at the same time using a low TLS resolution to minimise the amount of generated data and scanning time. The planning aid considers such scenarios and suggests an appropriate scanning procedure.

In some cases, the number of TLS-standpoints could be optimized in that if, for example, it is ascertained from the object model that there are similar or equal object parts, only one of the parts (as some sort of reference or model type) are determined as highly relevant and accordingly for a highly accurate stationary scanning while the other similar parts are determined for handheld scanning as of low relevancy resp. in the assumption that the scan results of the stationary scan are generally applicable to the other similar object parts, too. In the example, rooms R1 and R2 could be regarded as similar. Based on this consideration, only one of them, e.g. room R1 is to be scanned with the TLS while the rest of the floor, that is also the other room R2 is to be scanned with the MS.

The planning aid 5 comprises as a preferred option also an order of the arrangement of standpoints S1, S1', S2. The order is in particular determined in context of the criterion of minimizing walking distance, but can also consider further demands. For instance, in view of the second standpoint S2 being intended for scanning with a second, mobile scanner, such a scanning can in principle be executed in parallel to a scanning with a first, stationary scanner, whereby the second scanner resp. the user should stay out of the scanning field of the TLS scanner.

Hence, in this example, the order is such that the standpoint S1' in the "left" room R" is the first TLS-standpoint with the second standpoint S2 for handheld scanning is denoted for scanning in parallel to execution of the first scan 3b from standpoint S1'. The standpoint S1 in the "right" room R1 is foreseen as the last one. If it was the other way round, parallel stationary and mobile scanning was not optimal - though the overall walking distance might be smaller in this case- as the user at second standpoint S2 would be in the line of sight of the TLS-scanner at the stationing S1 in room R1 and thus produces a scan shadow. In general, availability of multiple scanners or human or robotic scanning agents which allow for parallel or synchronous scanning can be an input for the scanning plan calculation, influencing the number, type (TLS-standpoint or MS-standpoint) and/or order of standpoints S1-S2. Thereby, a suitable start orientation of a scanner at a standpoint can be calculated, too, for avoiding shadowing by parallel scanning, as a further refinement of the standpoint order.

As another option, the planning aid 5 offers an output, e.g. in graphical form on a GUI, where it is shown where to scan with which scanner. Also the coverage from each scan is shown. The user can move around a single scan e.g. on the UI and the impact on the scan coverage and total scanning plan is visualized to the user.

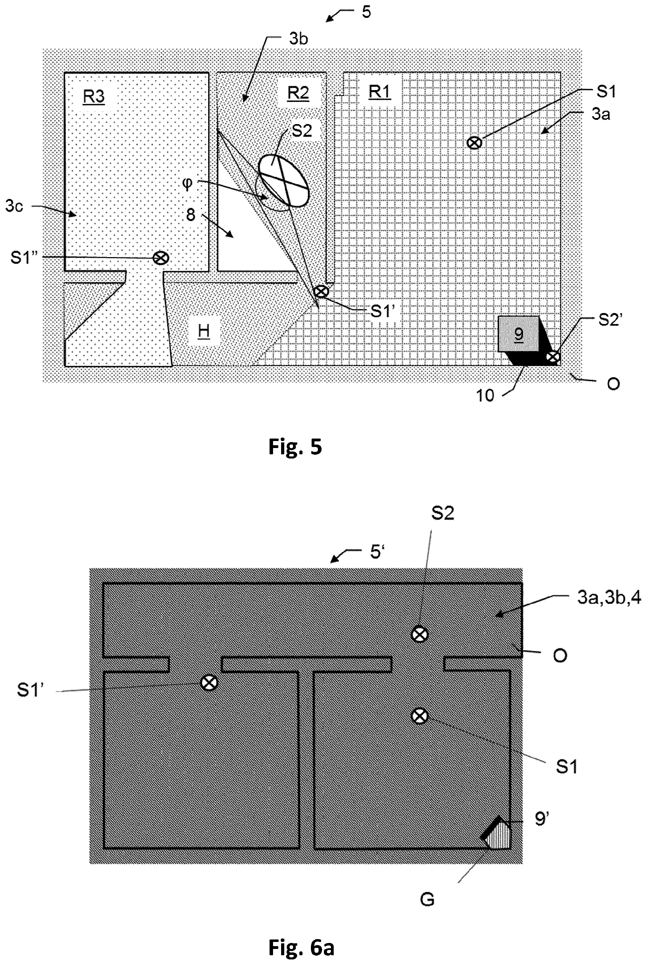

Figure 5 shows another example of a scanning plan 5. In this example, the object O to be scanned is a floor with three rooms R1,R2,R3 and a hall H. Based on a 2D-model of the object O, optimal standpoints S1, S1', S1", S2 are calculated considering optimization criteria such as minimal number of standpoints, minimal walking distance in between, sufficient overlap of the point clouds of each standpoint and possible object-point resolution or point density or quality. In the example, the result is an arrangement of three first standpoints S1-S1'' for full dome scanning with the stationary scanner, one standpoint in room R1, enabling a first TLS-scan 3a (checked pattern), another standpoint in hall H, at the entrance of room R2 for another TLS-scan 3b (dense point pattern, overlaid by the two other patterns) and a last stationary standpoint S1" near the entrance in room R3. By this arrangement, there is enough overlap of the TLS-scans 3a-3c for mutual registration.

However, a gap 8 would remain in second room R2 with this minimal number of TLS-standpoints S1-S1' ' resp. TLS-scans 3a-3c. This gap 8 of TLS-scans 3a-3c is instead to be filled with a scan by the handheld scanner, covering a scanning angle range ϕ from a standpoint S2. The lower quality of a MS-scan is in this case accepted as a trade-off to a saving of a fourth TLS-stationing as the TLS-gap 8 is small in absolute terms -as typically, accuracy of a mobile scan degrades with scanning range, such that e.g. only areas smaller within a defined limit such as two square meters at most are considered for handheld scanning- and relatively small compared to the main part of the room R2 being captured with high quality and the gap 8 does not contain any special object feature.

In the example, the second planned standpoint S2 is determined not as a "point" but as a certain region or area from which to scan with the mobile scanner. That is, a certain possible tolerance of second standpoint S2 is calculated and outputted. More generally spoken, the scanning aid can comprise an indication of necessary positioning accuracy as output. The planning aid can for instance indicate to the user how accurately the TLS scanner needs to be placed and/or aligned/levelled at the proposed position to meet the accuracy, completeness, and registration requirements. This indication helps the user to be as time efficient as possible with minimal overall field and processing time for a given number of TLS standpoints and gaps filled with the handheld scanner. In addition, also scanning parameters such as the required scanning resolution depending on the expected object distances and available requirements can be automatically calculated and outputted as part of the scanning plan and as a further option automatically be fed into or transmitted to a respective scanner.

In some developments of the method, the region S2 for positioning of the handheld scanner MS is ranging from a TLS-standpoint such as station S1' to an endpoint, indicating a measuring path. A continuous scanning or imaging with the MS, starting from a TLS standpoint or a point nearby allows for example to determine continuously a position of the mobile scanner MS based on object features, e.g. using ORB-, SIFT-, BRIEF- algorithms or optical flow algorithms and/or (inertial) odometry or SLAM techniques. In general, accuracy of localization of a scanner using such techniques can be another criterion for standpoint determination.

Said otherwise, the handheld scanning process can be aided by points scanned by the TLS scanner. The planning aid 5 "knows" what part of the object O are to be scanned by the handheld scanner, in the example from second standpoint S2. Surrounding points scanned by the TLS scanner, in the example scanned at first standpoint S1', can be provided to the handheld scanner to aid in its positioning or SLAM process. For instance, the TLS points can be used a fixed groundcontrol points in the local SLAM of the handheld scanner to improve the robustness and accuracy of the locally generated "handheld" point cloud.

In the example, the object O contains a part 9 near an edge of room R1, e.g. a pillar. This pillar shadows the edge from being scanning from the TLS-standpoint S1 and also from the other TLS-standpoint S1', i.e. there is no a direct line-of-sight to at least one of the TLS-scanning standpoints in this case. To include also this edge in the final combined point cloud of the object O resp. to avoid a shadow 10, the planning aid calculates another standpoint S2' for scanning the room edge and the "back" side of the object 9 with the handheld scanner MS. This way, a complete coverage of the floor is achievable with minimal effort. Also here, the second standpoint S2' may be an area rather than a point as such, e.g. in order to scan more than the back sides of the object 9 for scan registration in consideration that registration of all scans together is enabled to be performed robustly, accurately, and automatically. The overlapping regions between the scans should have enough geometry to fix all unknown dimensions of the relative transformations between the scans.

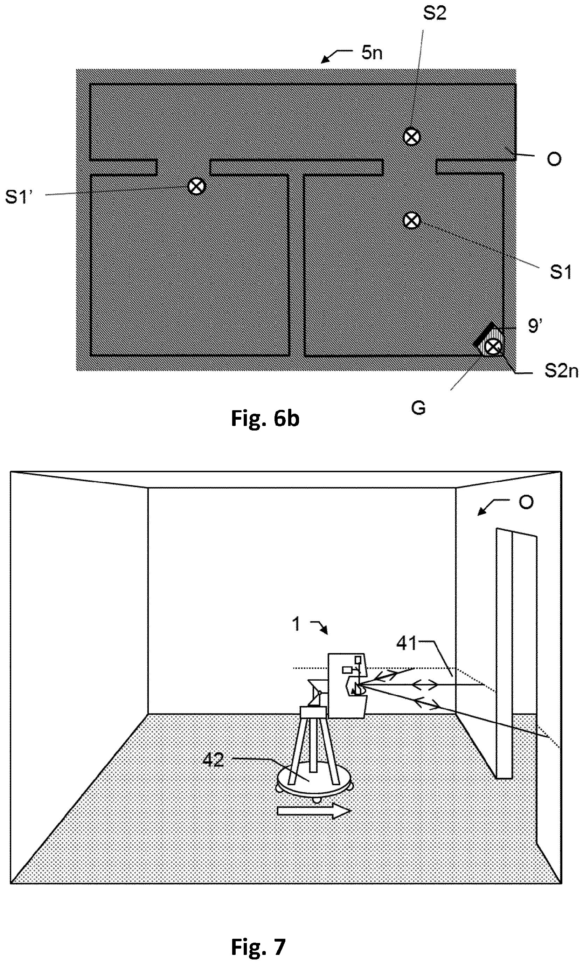

Figures 6a,b, related to figure 4, show an example of a scanning plan which is updated during the scanning process, e.g. after a single scan at standpoint S1, S1', S2 is finished or even during such a single scan and/or at the end of the scanning process, i.e. after all planned scans are done. Figure 6a shows the scanning plan 5', which evolved from the scanning plan 5 described in context of figure 4, after having finished the scans 3a,3b,4 from the suggested standpoints S1,S1',S2. Scan data provided by the scans 3a,3b,4 are inserted into the plan and compared with the intended result. In this case, it is detected that the object O is not completely scanned as it should have been according to the initial scanning plan 5 (see figure 4), but there is a gap G. The gap G is caused by an object 9' which is present in reality but had not been present in the object model. Based on the scanning data, the object 9' resp. the scanning gap G is then inserted into the thus updated object model resp. the scanning plan.

Then, as schematically shown in figure 6b, a new scanning plan 5n is established, wherein an additional second standpoint S2n is calculated which allows for a filling of the scanning gap G. The renewed scanning plan 5n is thereafter outputted to the user which is therewith notified not only of the existing missing area G but also of a way to complete the capture of the object O in the field.

Thus, the present method of automatically establishing and updating a scanning plan 5, 5n can also be used to verify the completeness continuously or after completing the scanning procedure. For example, every time an individual scan 3a, 3b or 4 is completed, the planning aid can verify if no areas will be left out from the total scan. This can happen for instance if a small object 9' such as small furniture was not properly modelled in the initial or rough model. The object 9' missing from the initial rough model can cast scanning shadows not considered during the planning stage. This results in areas G not seen in any of the planned scans.

If the planning aid is used to verify the completeness and a missing area is identified after a scan, the user is informed of the new missing area, for example through visualization on the planning aid. Because the user is informed immediately of missing areas, he can make additional scans before leaving the area. Alternatively, the user is informed of any identified missing areas after the whole scanning process is complete.

Another reason why areas can be missing from the total scan is if the user does not perform the individual scans according to the plan. Hence, the method can comprise determining a deviation of an executed single scan and/or a real standpoint, e.g. using measured scanner location data, from a planned scan or planned standpoint and outputting a warning or other notification to the user. Above that, a new scanning plan 5n is automatically generated based on the object model and optionally also based on already available scanning data or scanner position data, which reflects the current as-is situation and refines remaining planned standpoints and/or calculates new ones. If applicable, the planned arrangement can also be refined with respect to order of standpoints or other outputs such as distribution of laser scans between TLS-scans and MS-scans resp. allocation of stationary standpoints and mobile standpoints or outputs such as optimal scanning parameters (scan resolution etc.).

Figure 7 shows an example of generating a model of the object O which serves as basis for establishing the scanning plan. In the example, a TLS 1 is mounted on a mobile platform 42 thus it needs not to be carried for moving. The platform can have wheels or rollers or be placed on a corresponding frame. The platform may have a controlled motor resp. the arrangement of TLS 1 and platform 42 can be embodied as a robotic measuring device. Other such robotic arrangements can make use of a legged robot or a drone. A robotic platform can also be used for an automatic execution of laser scans according to the scanning plan when established.

The laser scanner 1 is tilted through approximately 90°, as illustrated, such that the transverse axis (the axis about which the beam steering unit is rotatable in relation to the upper part) now extends substantially vertically, whereby preferably, means for stabilizing the scanner 1 are present in the profiler mode in order to keep the scanning plane as horizontal as possible during the movement. Then, the user or the motor moves the laser scanner 1 in this hold while the laser scanner 1 automatically captures in each case the currently visible measurement surroundings/measurement surroundings accessible to the measuring beam as a visual range and records the path travelled. This is implemented in a profiler mode of the laser scanner 1. The latter is characterized in that the slow rotation of the upper part about the base is deactivated and consequently measurement points are only surveyed in one plane 41. The user tilting the laser scanner 1 through 90° renders a profile of the surroundings traversed along the path capturable, i.e., in particular, renders an outline recordable, by means of SLAM or lidar-SLAM, from which measurement surrounding points (task regions) to be surveyed can be derived. As an alternative or in addition thereto, an IMU or comparable sensors, e.g., a compass, can be used to assist the recording of the path or as an alternative to the use of SLAM. By way of example, surfaces are scanned with a rough or coarse point density of e.g. 10 cm (in relation to an object distance of a few metres, e.g., 5 m) . In any case, using this arrangement, it is possible to record, e.g., a horizontal profile of the room (outline) which serves as a 2D-model of the object O, which is continually expanded by moving the scanner until all parts of the object O are modelled.

As an alternative to such measuring beam-based model generation, the means for capturing measurement surroundings and deriving an object model are embodied as a camera, e.g., as a panoramic camera, depth camera, stereo camera, RIM camera or the like. This devices can be integrated in a TLS or MS or be an additional device, e.g. as part of a handheld computer.

A (rough) model of the entire object as input for establishing the scanning plan can alternatively or additionally be obtained by a handheld scanner (dedicated scanner or e.g., iPhone) which is used to create a rough scan of the object in a mobile-mapping process. Other possibilities are using a stored true to scale plan or a model like a building information model (BIM model) of a building. This could also be 2D floorplan or fast TLS scan with the TLS in fast (lowresolution) mode at multiple stationings. The model can also be retrieved from a previous (older) scan or point cloud of the object, which then is not necessarily a rough model in the sense of low accuracy or resolution, whereby as an option the model can be made rough (er) in a targeted manner for faster data processing in course of the method.

Optionally, object recognition algorithms are used when establishing the object model. Object recognition is used to identify objects, e.g., objects of particular interest such as doors, windows, buildings, etc., with the object recognition optionally being based on machine learning. In the process, it is also possible to classify objects or parts of the extended object regarding relevancy, for example for allocation either to be TLS-scanned or to be MS-scanned.

As an option, such a (rough) model of an object O can be used in the final scan. Examples use cases are for areas where little accuracy is required or when precise scans are needed only for certain regions of (high) relevancy or using the model as an aid in the registration process.

As another option, the rough model or an actual TLS-point cloud can be displayed to the surveyor using augmented reality to aid the surveyor in scanning the proper area with the handheld scanner. Augmented reality glasses or a display of the handheld scanner could for instance be used to display such a location guidance to the surveyor.

Although the invention is illustrated above, partly with reference to some specific embodiments, it must be understood that numerous modifications and combinations of different features of the embodiments can be made and that the different features can be combined with measuring principles and/or surveying instruments known from prior art.

## Claims

1. A method for automatically establishing an optimal laser scanning plan (5, 5n), the scanning plan (5, 5n) indicating an optimal arrangement of multiple distributed standpoints (S1, S1', S1", S2, S2', S2n), the arrangement enabling a scanning of an extended object (O) by multiple terrestrial scans (3a, 3b, 3c, 4) of different object parts (R1, R2, R3, H, 9, 9') at respective standpoints (S1, S1', S1", S2, S2'), the method comprising
• calculating optimal first standpoints (S1, S1', S1") for first scans (3a, 3b, 3c) to be executed with a first, stationary laser scanner (TLS, 1) using a model of the object (O) which provides at least a two-dimensional, in particular a tree-dimensional, geometric overview of the entire object (O) and considering defined optimization criteria of
∘ number of standpoints (S1, S1', S1", S2, S2', S2n),
∘ walking distance given by standpoints (S1, S1', S1", S2, S2', S2n) and/or an overall walking distance,
∘ overlap (6a, 6a', 6b) of neighboring scans (3a, 3b, 3c, 4),
o point quality,
whereby possible second scans (4)to be executed with a second, handheld mobile scanner (MS, 2) or stationary laser scanner at second standpoints (S2, S2', S2n) as possible filling between or augmenting the first scans (3a, 3b, 3c) are taken into account in the calculation as an optimization parameter, and, if necessary, calculating such second standpoints (S2, S2', S2n),
• based on the model of the object (O), outputting the scanning plan (5, 5n) indicating the optimal arrangement of first standpoints (S1, S1', S1") and -if applicable- of second standpoints (S2, S2', S2n) by a graphic user interface (GUI) to a user.

2. Method according to claim 1
**characterized by**
updating the scanning plan (5, 5n) in the field after and/or during the scanning process of the object (O), in particularly in real-time or after each laser scan, based on scan data of the object (O) resulting from executed scans (3a, 3b, 3c, 4) and/or on measured position data of the TLS (1) and/or MS (2).

3. Method according to claim 2
**characterized in that**
the updating comprises
• verifying if all object parts (R1, R2, R3, H, 9, 9') which should have been captured at respective stage of execution of the scanning plan (5, 5n) have indeed been captured, and
• outputting the updated scanning plan (5n) with a graphical indication of the missing object part (G).

4. Method according to claim 2 or 3
**characterized in that**
the updating comprises calculating an additional standpoint (S2n) for an additional scan and/or a relocation of an existing standpoint (S1, S1', S1", S2, S2').

5. Method according to any one of the preceding claims
**characterized in that**
the calculation of first and/or second standpoints (S1, S1', S1", S2, S2', S2n) takes into account an availability of reference points for location determination of the MS (2) to be provided by a first scan (3a, 3b, 3c).

6. Method according to any one of the preceding claims
**characterized in that**
a maximal allowable measuring distance for the MS (2) is taken into account in the calculating of standpoints (S1, S1', S1", S2, S2', S2n).

7. Method according to any one of the preceding claims
**characterized by**
considering a parallel execution of first and second scans (3a, 3b, 3c, 4) and avoiding mutual shadowing of parts of the object (O) by the parallel execution when calculating first and second standpoints (S1, S1', S1", S2, S2', S2n).

8. Method according to any one of the preceding claims
**characterized by**
the arrangement comprises a calculated optimal order of the standpoints (S1, S1', S1", S2, S2', S2n).

9. Method according to any one of the preceding claims
**characterized by**
generating the model of the object (O) by a mobile mapping process with the TLS (1) or MS (2).

10. Method according to any one of the preceding claims
**characterized by**
the criterion of overlap (6a, 6a', 6b) of neighboring scans (3a, 3b, 3c, 4) comprises provision of overlap (6a, 6a', 6b) of a geometric object feature.

11. Method according to any one of the preceding claims
**characterized in that**
providing a graphical user guidance for optimized scanning with the MS (2) at a respective second standpoint (S2, S2', S2n) based on the scanning plan (5, 5n) by the GUI, in particular as an augmented reality view.

12. Method according to any one of the preceding claims
**characterized by**
calculation optimal scanner parameters, in particular a scanning resolution, for each standpoint (S1, S1', S1", S2, S2', S2n) and outputting the optimal scanning parameter as part of the scanning plan (5, 5n).

13. Method according to any one of the preceding claims
**characterized by**
classification of object parts (R1, R2, R3, H, 9, 9') according to relevancy and
• considering the respective relevancy in context of the criterion of point density and/or
• in case the model of the object (O) provides a three-dimensional overview, considering object parts (R1, R2, R3, H, 9, 9') of low relevancy as not to be scanned and filling absent scanning data of the omitted object parts (R1, R2, R3, H, 9, 9') using data of the model of the object (0).

14. Method according to any one of the preceding claims
**characterized by**
calculating a requirement for device positioning accuracy for a respective standpoint (S1, S1', S1", S2, S2', S2n) and outputting the calculated requirement as part of the scanning plan (5, 5n).

15. Computer program product having program code stored on a machine-readable medium, in particular on an electronic data processing unit configured as a control and evaluation unit of a stationary laser scanner (TLS, 1), for carrying out the method according to claim 1.
